Europäisches Patentamt

European Patent Office

Office européen des brevets

(19)

(11) **EP 0 595 281 B1**

(12) **EUROPEAN PATENT SPECIFICATION**

(45) Date of publication and mention
of the grant of the patent:
**16.01.2002 Bulletin 2002/03**

(51) Int Cl.7: **C08G 18/60**, C09D 175/04,
C08G 18/08, C08G 18/40,
C08G 18/48

(21) Application number: **93117375.1**

(22) Date of filing: **27.10.1993**

(54) **Water dispersible ionic and nonionic polyamide modified polyurethane resins for use in coating compositons**

In Beschichtungszusammensetzungen verwendbare, wasserdispergierbare ionische und nichtionische Polyamid-modifizierte Polyurethanharze

Résines de polyuréthane ioniques et non-ioniques, dispersables dans l'eau, modifiées par un polyamide, utilisables dans des composiitons de revêtement

(84) Designated Contracting States:
**BE DE ES FR GB IT NL SE**

(30) Priority: **30.10.1992 US 969662**

(43) Date of publication of application:
**04.05.1994 Bulletin 1994/18**

(73) Proprietor: **BASF CORPORATION
Parsippany, NJ 07054 (US)**

(72) Inventors:
• **Menovcik, Gregory G.
Farmington, Michigan 48334 (US)**
• **DePue, Jeffrey S.
Canton, Michigan 48187 (US)**

• **Turner, Hennon
Detroit, Michigan 48207 (US)**

(74) Representative: **Münch, Volker, Dr.
Dres. Fitzner & Münch Rechts- und
Patentanwälte Lintorfer Strasse 10
40878 Ratingen (DE)**

(56) References cited:
**EP-A- 0 475 127        FR-A- 2 143 375
GB-A- 1 452 073**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

The present invention pertains to the field of polyurethane resins, and more specifically to ionic and nonionic polyamide modified polyurethane resins for use in coating compositions.

Background of the Invention

The use of polyurethane resins in coating compositions is well known. These resins are generally synthesized by treatment of diisocyanates with diols. Such resins are disclosed in U.S. Patent No. 4,794,147. Polyurethane resins are widely used for both basecoat and clearcoat coating compositions. There is however, ongoing research to develop resins and coatings with improved performance characteristics. One area of performance concerns the resistance of a cured coating to stone chipping and impact resistance.

The damage caused by chipping and impact is particularly problematic in the area of vehicle coatings. The availability of a resin and coating that provides improved chip and impact resistance provides an important advance in the art. Costly repairs to coatings damaged from stone chipping and other impacts could be greatly reduced, and the life of a coated article prolonged.

It has unexpectedly been found that polyamide modified polyurethane resins are useful in a coating composition, because the polyamides themselves are highly viscous and have low solubility. It is also surprising, because of the low solubility of the polyamides, that the polyamide modified polyurethane resin has excellent water dispersibility properties. The coating containing the polyamide modified resin exhibits a high degree of transparency and provides a high quality clearcoat. Additionally, the coatings demonstrate good resistance to high humidity conditions.

This invention, therefore, relates to the field of polyurethane coatings for use in automobile basecoat/clearcoat systems. In particular, this invention relates to the discovery that polyamide modified polyurethane resins and coating compositions prepared therefrom demonstrate a high degree of resistance to stone chipping and damage caused by both direct and reverse impact. These coating compositions exhibit coating characteristics superior to those taught by the art and are especially useful as clearcoats and basecoats for automobiles.

Summary of the Invention

The ionic and nonionic polyamide modified polyurethane resins of the present invention are formed by reacting a polyamide with a diisocyanate functional monomer a prepolymer having at least two reactive hydrogens, and a hydrophilic functional monomer.

The polyamide monomer is formed first by reacting an organic compound having two reactive hydrogens, such as aromatic, aliphatic or cycloaliphatic anhydrides or diacid halide, with an amine containing compound such as a diamine, amino alcohol, amino thiol or mixture of these. The resultant polyamide monomer is a low molecular weight monomer having a molecular weight ranging from 200 to 2000. The polyamide monomer comprises from 1.0 percent to 5.0 percent of the total resin composition weight.

The polyamide is subsequently reacted with a prepolymer having at least two reactive hydrogens. The prepolymer can be a polyol or an aromatic or aliphatic diol or triol. The prepolymer comprises from 5.0 percent to 25 percent of the total resin composition weight.

The polyamide and prepolymer are reacted in the presence of diisocyanate, to provide chain extension. The diisocyanate is an aliphatic diisocyanate compound such as isophorone diisocyanate, 1,6-hexamethylene diisocyanate, 1,4-butylene diisocyanate, methylene bis (4-cyclohexyl) isocyanate and 2,4 toluene diisocyanate. Excess diisocyanate is utilized to provide an intermediate urethane resin having free isocyanate groups at the ends. The NCO content of the polyurethane polymer is from 0.24 to 0.30 meq of isocyanate per gram of polymer.

The amide modified polyurethane resins obtained by the reaction described above are stabilized to improve the water miscibility of the resin, by reacting the resin with monomers having a hydrophilic functional group. The anionic resins are stabilized by reaction with monomers having ionizable functional groups such as carboxyl groups. The monomer is present in an amount between 3.0 and 5.0 percent by weight based on total resin weight. The molecular weight of the anionic resins ranges from 25,000 to 50,000, and is preferably 35,000 to 45,000.

The nonionic resins are stabilized by reaction with monomers having hydrophilic groups that are non ionizable. These monomers include monofunctional and difunctional polyethers and polyoxides, with the monofunctional polyethers and polyoxides being particularly preferred. These monomers are present in an amount between 5 percent to 30 percent by weight. The molecular weight of the nonionic resins ranges from 350 to 5,000.

The ionic polyurethane resins are made water dispersible by the addition of an amine selected from the group consisting of primary, secondary and tertiary amines, to promote water dispersibility. Nonionic resins utilize coupling solvents such as n-butanol and butylcellosolve and cosolvents such as carbitol, butyl carbitol and cellosolve acetate as dispersion aids. Following this step the resin is then dispersed in deionized water.

The amide modified polyurethanes of the present invention are utilized in coating compositions for water based coatings and are more fully described herein below.

Detailed Description of the Invention

The polyamide modified polyurethane resin and coating composition of the present invention are formulated to provide improved resistance to stone chipping and improved resistance to both direct and reverse impact.

The water dispersible polyamide modified polyurethane resin of the present invention is the reaction product of: (a) a polyamide monomer obtained by reacting i) an organic compound having two reactive hydrogens selected from the group consisting of aromatic, aliphatic, and cycloaliphatic anhydrides and diacid halides with ii) an amine containing compound including diamines, amino alcohols, amino thiols and mixtures thereof, b) a prepolymer having at least two reactive hydrogens, including polyols, and aromatic and aliphatic diols and triols, c) a diisocyanate functional monomer, and d) a monomer having a hydrophilic functional group.

The polyamide monomer is the reaction product of (i) a compound having two reactive hydrogens and (ii) an amine containing compound (ii). Compound (i) is preferably a cycloaliphatic anhydride such as 1,2-cyclohexane dicarboxylic anhydride, phthalic anhydride or succinic anhydride, or a diacid halide such as terephthaloyl chloride, succinyl chloride or adipoyl chloride. The amine containing compound is preferably an amino alcohol such as ethanolamine, propanol amine or 2-amino-2-methyl-1-propanol, an amino thiol such as 2-amino ethanethiol, or a diamine such as 1,4-diaminocyclohexane, 1,6-hexanediamine, or ethylene diamine.

The low molecular weight polyamide, having a molecular weight of between 200 and 2000 is synthesized as follows. One mole of cyclic anhydride as described above, is dissolved in a suitable, low boiling point aromatic solvent such as toluene, xylene or benzene. The anhydride is then reacted with two molar equivalents of an amino alcohol as described above. The reaction exotherms from room temperature to 80+°C. The mixture is then heated to between about 100°C and about 140°C liberating water, which is collected and weighed. When the calculated amount of water is collected and removed, the reaction mixture is cooled and the diol terminated polyamide product is collected. The resulting polyamide monomer typically has a molecular weight of between 200 and 300.

Di-thiol terminated polyamides and diamine terminated polyamides are prepared by the same process by substituting amino thiols or diamines respectively, for the amino alcohol.

Higher molecular weight polyamides having a molecular weight of between 300 and 2,000 are made in a process similar to that for low molecular weight polyamides, except that the diamine is treated with two molar equivalents of a cyclic anhydride instead of one, in a suitable solvent and heated, if necessary, to between 100°C and 130°C until an acid number is obtained which is consistent with a dicarboxylic acid terminated amide. This intermediate is then treated with two molar equivalents of an amino alcohol and heated to between 120°C and 140°C. When the calculated amount of water is collected and discarded, the reaction mixture is cooled to room temperature to afford the diol terminated polyamide.

Diamine terminated polyamides are obtained by treating with two molar equivalents of diamine in place of the amino alcohol. Di-thiol terminated polyamides are obtained by substituting a thiol amine for the amino alcohol.

An alternative method for forming a diol or amine terminated polyamide utilizes diacid chloride and diamine or amino alcohol. The diacid chloride is dissolved in a suitable solvent such as methylene chloride, chloroform or 1,2-dichloroethane, and is then treated with two molar equivalents of an amino alcohol and two molar equivalents of a tertiary amine base which neutralizes the hydrochloric acid produced during the course of the reaction. The resultant mixture is allowed to react to afford the diol or amine terminated polyamide. The crude reaction mixture is then titrated with a stoichiometric amount of sodium bicarbonate. The resulting polyamide has a molecular weight of between 200 and 400.

Higher molecular weight diol or amine terminated polyamides, having a molecular weight in the range of 400 to 2000, are prepared by first treating a diamine with two molar equivalents of a diacid chloride in the presence of two molar equivalents of a tertiary amine base. A diacid chloride terminated polyamide intermediate is formed. This intermediate is then treated with two molar equivalents of an amino alcohol or diamine in the presence of two molar equivalents of a tertiary amine base. The reaction mixture is treated with sodium bicarbonate and filtered as described above.

To produce the polyamide modified polyurethane of the present invention, the polyamide monomer (a), formed as described above, is combined with the prepolymer (b) in the presence of excess diisocyanate functional monomer (c). The prepolymer (b) serves as a chain extender as it includes compounds having hydroxyl groups that react with the isocyanate groups to build up the polyurethane backbone. The prepolymer compounds include polyols such as polyester, polyether, polycarbonate, and trimethylolpropane and aromatic and aliphatic diols and triols such as 1,6 hexane diol, cyclohexanedimethylol, 1,4-butanediol, hexanetriol, pentaerythritol and mixtures thereof.

The prepolymer compounds such as polyester polyols are formed by reacting a compound having at least two carboxylic acid functionalities with at least two alcohol functionalities. The carboxylic acid component of the polyester may be comprised of long chain dicarboxylic acids, short chain dicarboxylic acids, mixtures thereof or carboxylic acid equivalents such as anhydrides, lactones, and polycarbonates, among others. Long chain monocarboxylic acids may also be used, but these are generally employed to chain terminate the polyester resin.

The shorter chain carboxylic acid component, if used, may be comprised of mono-, di-, or higher functionality carboxylic acids, or a mixture of these carboxylic acids having carbon chains of 18 or fewer carbon atoms. Monocarboxylic acids function to terminate a polyester chain and are chosen for that purpose. It is preferable that the short chain carboxylic acid component be a dicarboxylic acid. Such preferred dicarboxylic acid compounds include, for example adipic, azeleic, and other aliphatic dicarboxylic acids. Also suitable are aromatic dicarboxylic acids. Especially preferred is isophthalic acid. Alkylene and aralkylene carboxylic acids may also be employed.

The polyester polyols are synthesized from one or more of the above-described carboxylic acid components and an excess of a polyol component. An excess of polyol is used so that the polyester resin preferably contains terminal hydroxyl groups. The polyol compounds preferably have an average hydroxy functionality of at least 2. The polyester polyol is comprised of one or more polyols, preferably a diol. Up to about 25 percent by weight of the polyol component may be a polyol having three or more hydroxy groups per molecule. Where polyols having three or more hydroxy groups are chosen, the result is a branched polyester.

While it is not always desirable to have a triol or higher multi-functional alcohol present because of the tendency to form a branched chain polyester, some branching may be desirable, especially in the case where the polyester is to be incorporated into a branched polyurethane. There may also be a small amount of monoalcohol in the polyol component, particularly if larger proportions of higher functional alcohols are used. These alcohols serve as chain terminators.

The diols usually employed in making the polyester prepolymers include alkylene glycols, such as ethylene glycol, propylene glycol, butylene glycol, neopentyl glycol, and 1,6-hexanediol and other glycols such as hydrogenated bisphenol A, cyclohexane dimethanol, caprolactone diol (i.e. the reaction product of caprolactone and ethylene glycol), hydroxylated bisphenols, and the like. However, other diols of various types and, as indicated polyols of higher functionality may also be utilized. Such higher functional alcohols can include for example, trimethylolpropane, trimethylolethane, pentaerythritol, and the like, as well as higher molecular weight polyols.

The low molecular weight diols which are preferred in the invention have hydroxy values of 200 or above, usually within the range of about 1500 to 2000. Such materials include aliphatic diols, particularly alkylene polyols containing from 2 to 18 carbon atoms. Examples include ethylene glycol, 1,4-butanediol, cycloaliphatic diols such as 1,2-cyclohexanediol and cyclohexane dimethanol. An especially preferred diol is 1,6-hexanediol.

The polyester prepolymers are prepared as set forth in Examples 1-3. However, any suitable method of preparation may be employed. Generally, the reaction is conducted at a temperature of between about 200° and 230°C, and preferably between 210°C and 220°C. The reaction time ranges from about 15 hours to about 30 hours. Preferably reaction time is between 18 hours and 25 hours. The polyester prepolymers have a solids content ranging from 70 to 90 percent, and preferably between 75 and 85 percent.

The polycarbonate prepolymers are prepared from diethyl carbonate and an excess of a polyol component. An excess of polyol is used so that the polycarbonate is hydroxy terminated. The diethyl carbonate is present in an amount of between 20 and 40 percent by weight. The polyol component is as described above for the polyester prepolymer. The polyol or mixture thereof is present in an amount between about 50 and 80 percent by weight. A catalyst such as an organic titanate is also utilized. A preferred catalyst is tetraisopropyl titanate, sold under the trademark TYZOR, and available from DuPont.

The polycarbonate polyols are prepared as set forth in Examples 4 and 5. However, any suitable method of preparation may be employed. Generally, the reaction is conducted at a temperature of between about 120° and 140°C, and preferably between 120°C and 130°C. The reaction time ranges between about 1 hour and about 2 hours. Preferably reaction time is between 1 hours and 1.5 hours. The resulting polycarbonate has a molecular weight range of 1100 to 1900 with a melting point range of 35° to 70°C.

Formulations for specific prepolymers are set forth in the Examples following the detailed description.

An excess of diisocyanate functional monomer is included to produce an intermediate polyurethane resin having free isocyanate groups at the ends. The diisocyanate functional monomer is an aliphatic diisocyanate compound such as isophorone diisocyanate, 1,6-hexamethylene diisocyanate, 1,4-butylene diisocyanate, methylene bis 4-cyclohexyl isocyanate, 2,4 toluene diisocyanate, dicyclohexylmethane diisocyanate, diphenyl methane-4:4'diisocyanate, toluene diisocyanate, methylcyclohexylene diisocyanate, and cyclohexylmethane diisocyanate and mixtures thereof.

The polyamide monomer (a) is utilized in an amount between 3 to 20 percent by weight, and preferably between 5 and 10 percent by weight based on total resin weight. The prepolymer (b) is present in an amount between 30 to 70 percent by weight, and preferably between 45 and 60 percent by weight based on total resin weight. The diisocyanate functional monomer (c) is utilized in an amount between 15 and 30 percent by weight, and preferably between 18 and 23 percent by weight, based on total resin weight.

The polyamide modified polyurethane polymer is prepared by the following reaction. The polyamide monomer is mixed with the prepolymer, diisocyanate and low molecular weight ketone solvent such as methyl ethyl ketone, methyl isobutyl ketone, methyl amyl ketone and methyl propyl ketone. The resin has a non volatile content ranging from about 65 percent to about 95 percent, and preferably from 75 percent to 90 percent. The reaction is conducted at a temperature of between about 90° and 160°C, and preferably between 105°C and 120°C. The reaction time ranges from about 2 hours to about 6 hours. Preferably reaction time is between 1.5 hours and 4 hours.

The NCO content of the polyurethane polymer is from 0.18 to 0.30 meq, preferably 0.22 to 0.28 meq of isocyanate per gram of polymer.

The amide modified polyurethane resins obtained by the reaction described above are stabilized to improve the water miscibility of the resin, by reacting the resin with monomers having a hydrophilic functional group. The anionic resins are stabilized by reaction with monomers having ionizable functional groups such as carboxyl groups. The monomer is present in an amount between 5 and 25 percent by weight and preferably in an amount between 8 and 20 percent by weight based on total resin weight. The desired degree of water miscibility is achieved with a polymeric resin having an acid number from 15 to 55 and preferably from 18 to 30.

The nonionic resins are stabilized by reaction with monomers having hydrophilic groups that are non-ionizable. These monomers include monofunctional and difunctional polyethers and polyoxides, with the polyethers being particularly preferred. The monofunctional polyethers are preferably formed from monoalcohol initiated polymerization of ethylene oxide, propylene oxide, and mixtures thereof. Examples of suitable polyethers and polyoxides include polyvinylmethyl ether, polyethylene oxide, polypropylene oxide, polyoxymethylene, polyaziridine and polyethylene imine. These monomers have a molecular weight of between 1200 and 3000 and are present in an amount between 5 percent to 30 percent by weight, preferably from 8 to 20 percent by weight based on total weight of the final polyurethane resin.

Any unreacted isocyanate remaining in the polyamide modified polyurethane resin composition can be capped with a trifunctional monomer to increase the molecular weight and the hydroxyl density of the resin. Suitable monomers for this purpose include amino alcohols such as ethanolamine and diethanolamine since the amino groups preferentially react with the isocyanate groups present. Multi-functional alcohols such as trimethylolpropane and ethylene glycol can also be used for this purpose. The increase in hydroxyl density is used for crosslinking with a melamine or an isocyanate crosslinker during the film forming process. The capping ratio of OH/NCO is typically 3:1, so that limited branching occurs and the optimal amount of hydroxyl density is present for crosslinking, however, ratios of OH/NCO may be as low as 2:1.

The ionic polyurethane resins are made water dispersible by the addition of an amine selected from the group consisting of primary, secondary and tertiary amines, to promote water dispersibility.

Nonionic resins utilize coupling solvents as dispersion aids, to promote water dispersibility. Such solvents include n-butanol, butylcellosolve, carbitol, butyl carbitol and cellosolve acetate Following this step the resin is then dispersed in deionized water.

The polyamide modified polyurethane resin is formulated into a basecoat or clearcoat composition by mixing the polyamide modified polyurethane resin with a suitable crosslinking agent. The crosslinking agents may include monomeric or polymeric aminoplasts or polyisocyanates.

Aminoplast resins are aldehyde condensation products of melamine, urea and similar compounds. Products obtained from the reaction of formaldehyde with melamine, urea, or benzoguanamine are most common and are preferred herein. However, condensation products of other amines and amides can also be employed, for example, aldehyde condensates of triazines, diazines, triazoles, guanidines, guanamines, and alkyl and aryl substituted derivatives of such compounds, including alkyl and aryl substituted ureas and alkyl and aryl substituted melamines. Some examples of such compounds are N,N'-dimethylurea, benzourea, dicyandiamide, formoguanamine, acetoguanamine, ammeline, 2-chloro-4,6-diamino-1,3,5-triazine, 6-methyl-2,4-diamino,1,3,5-triazine, 3-5-diamino-triazole, triaminopyrimidine, 2-mercapto-4,6-diaminopyrmidine and 2,4,6-triethyl triamino-1,3,5 triazine.

Alternatively, a polyisocyanate crosslinker may be used.

Other components of the coating composition include pigments, one or more rheology control agents, water and a small amount of organic solvent if needed. Other agents may be included such as various fillers, surfactants, plasticizers, wetting agents, defoamers, adhesion promoters, catalysts, conditioning agents, thickeners, antioxidants, leveling agents and mixtures thereof.

A grind resin may also be used in the basecoat compositions of the present invention. The grind resin may be comprised of a number of polyurethane resins, which may be the same as or different from the principal or major vehicle resin in chemical character. The grind resin may range between about 2 and about 25% by weight of the total solids in the coating composition and preferably comprises about 5-40% by weight of the basecoat composition.

Pigments may be incorporated into the basecoat composition to provide the desired cosmetic characteristics. This is done by mixing pigments with the above-described grind resin, and in addition, optionally, aminoplast resin to form a pigment paste.

The final pigment paste comprises about 3% to about 65% by weight of a pigment and about 5% to about 65% by weight of a grind resin, and optionally, up to 50% by weight of a cross-linking agent.

Any standard pigment known in the art may be used with resins of the present invention so long as these pigments can be formulated without affecting the desired characteristics of the resins. Specific examples of dye stuffs or pigments may be inorganic or organic, for example graphite, carbon black, zinc chromate, strontium chromate, barium chromate, lead chromate, lead cyamide, titanium dioxide, zinc oxide, cadmium sulfide, iron oxide, aluminum flakes, zinc sulfide, phthalo cyanine complexes, naphthol red, quinacridones and halogenated thioindigo pigments, among others.

Metallic flake pigments such as aluminum flake and silver may be used alone or in mixture with non-metallic pigments.

The resinous dispersions of basecoat or clearcoat are dispersed in organic solvents such as butyl cellosolve, xylene, N-butyl acetate, butyl alcohol, carbitol, and N-propyl acetate.

The basecoat compositions of the present invention are applied in one or more coats, to a substrate which can be metallic, plastic, ceramic, wood, paper, etc. The coating may be sprayed or electrostatically deposited onto the substrate.

After being deposited, the substrate may be flash dried at a temperature sufficient to remove a portion of the solvent, but below that sufficient to cure the applied coating, typically temperatures within the range of from room temperature to about 145°F (63°C). After the first basecoat is deposited, a second basecoat and subsequent layer of basecoat, if needed or desired, can be deposited over the first either with or without flash drying. One or more clear, transparent top coat layers are then subsequently applied over the last base coat layer. Any known unpigmented or transparently pigmented coating agent is, in principle, suitable for use as the top coat material.

After the clear coat is applied over the base coat layer(s), the multi-layer coating is then baked to crosslink and cure the polymeric materials and to drive the small amount of residual water and/or solvent from the coating layer (s). This baking step generally involves the heating of the coated substrate for periods of from about 10 to about 60 minutes and temperatures ranging between about 150°F (66°C) and 300°F (149°C). The baking step cures the multi-layer coating to a hard, durable film.

The invention will be further described in connection with several examples that follow. These examples are shown by way of illustration of the invention and are not meant to limit the scope of the invention. All parts and percentages in the examples are by weight unless otherwise indicated.

## EXAMPLES

## EXAMPLE 1

### Linear Polyester Diol Intermediate

The following monomers were weighed and charged to a three neck round bottom flask. The reactor was set up to go through a packed column equipped with a moisture trap. The trap was initially filled with xylene.

| RAW MATERIAL | WT % |
| --- | --- |
| Dimer fatty acid | 53.73 |
| Isophthalic acid | 15.45 |
| 1,6 Hexane diol | 28.64 |
| Xylene | 2.18 |
| TOTAL | 100.00 |

The mixture was blanketed with nitrogen and the reaction temperature increased slowly until a temperature of 215°C was reached. The reaction was held at this temperature until an acid number of 4.00-3.5 was reached about 18-25 hours). Once the temperature of 215°C was reached xylene was stopped from returning to the reactor. When the reaction reached an acid number of 4.00-3.50, the reaction was cooled to 150°C. When the temperature of 150°C was reached, vacuum was slowly applied to strip the remaining xylene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

## EP 0 595 281 B1

### Example 2

**Polyester Intermediate with Dimer Fatty Acid**

The following monomers were weighed and charged to a three neck round bottom flask. The reactor was set up to go through a packed column equipped with a moisture trap. The trap was initially filled with toluene.

| RAW MATERIAL | WT % |
|---|---|
| Dimer fatty acid | 30.294 |
| Adipic acid | 30.294 |
| 1,6 Hexane diol | 37.203 |
| Toluene | 2.208 |
| TOTAL | 100.00 |

The mixture was blanketed with nitrogen and the reaction temperature increased slowly until a temperature of 215°C was reached. The reaction was held at this temperature until an acid number of 4.00-3.5 was reached. This reaction time ranged from 18 to 25 hours. Once the temperature of 215°C was reached toluene was stopped from returning to the reactor. When the reaction reached an acid number of 4.00-3.50, the reaction was cooled to 150°C. When the temperature of 150°C was reached, vacuum was slowly applied to strip the remaining toluene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

### EXAMPLE 3

**Non Dimer Fatty Acid Polyester**

The following monomers were weighed and charged to a three neck round bottom flask. The reactor was set up to go through a packed column equipped with a moisture trap. The trap was initially filled with xylene.

| RAW MATERIAL | WT % |
|---|---|
| Heptanedioic acid | 27.426 |
| Adipic acid | 25.365 |
| 1,6 Hexane diol | 45.033 |
| Toluene | 2.160 |
| TOTAL | 100.00 |

The mixture was blanketed with nitrogen and the reaction temperature increased slowly until a temperature of 215°C was reached. The reaction was held at this temperature until an acid number of 4.00-3.5 was reached, about 18-25 hours. Once the temperature of 215°C was reached toluene was stopped from returning to the reactor. When the reaction reached an acid number of 4.00-3.50, the reaction was cooled to 150°C. When the temperature of 150°C was reached, vacuum was slowly applied to strip the remaining toluene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

### EXAMPLE 4

**Polycarbonate Diol of 1,6 Hexane Diol and Neopentyl Glycol**

The following monomers were weighed and charged to a three neck round bottom flask.

| | |
|---|---|
| 1,6-hexane diol | 2.57 moles |
| neopentyl glycol | 2.25 moles |
| diethyl carbonate | 4.72 moles |

The above ingredients were combined, by first forming a mixture of the diol and glycol and then adding the diethyl carbonate. To this mixture a catalyst (i.e. Lewis acid) was added to assist the reaction. The Lewis acid chosen was an organic titanate such as tetraisopropyl titanate (TYZOR From DuPont). The amount of catalysts were used based on the total weight of diol and carbonate used amounting to approximately 600 parts per million by weight. A small amount of xylene was used to dissolve the two diols so that the reaction would be a homogenous reaction instead of a two phase system.

The reaction mixture was heated slowly under nitrogen atmosphere until the temperature of 130°C was reached. At this point ethyl alcohol and xylene were distilled from the reaction. After the reaction was complete, (shown by no ethyl alcohol being distilled over), the reaction mixture was subjected to a vacuum strip to remove the last traces of ethyl alcohol.

The resulting polycarbonate diol was a waxy solid which ranged in molecular weight from 1100 to 1900 with a melting point ranging from 36° to 48°C.

### EXAMPLE 5

### Polycarbonate Diol of Hydrogenated Bisphenol A and 1,6-hexane diol

The following ingredients were weighed and charged to a three neck round bottom flask.

| | |
|---|---|
| hydrogenated bisphenol A | 2.083 moles |
| 1,6-hexanediol | 2.083 moles |
| diethyl carbonate | 3.90 moles |

First a mixture of diols was formed and this mixture was then combined with the diethyl carbonate. An organic titanate catalyst, tetraisopropyl titanate from DuPont, was used to assist the reaction. The amount of catalyst used was based on the total weight of the diol and carbonate used in the reaction. This amounted to approximately 600 parts per million by weight. A small amount of xylene was used to dissolve the two diols so that the reaction would be homogenous instead of a two phase system.

The reaction mixture was heated slowly under a nitrogen atmosphere until the temperature of 130°C was reached. At this point ethyl alcohol and xylene were distilled from the reaction. After the reaction reaches 130°C the total time to completion is between 60 and 90 minutes. After the reaction was complete, (i.e. no signs of ethyl alcohol being distilled over), the last traces of ethyl alcohol were removed by vacuum strip distillation.

The resulting polycarbonate diol was a waxy solid which ranged in molecular weight from 1200 to 1800 with a melting point ranging from 48° to 67°C.

### EXAMPLE 6

### Nonionic Amide Modified Polycarbonate Polyester Polyurethane

The following ingredients were reacted as explained below to form a nonionic amide modified polycarbonate polyester polyurethane resin.

| Ingredient | Weight % |
|---|---|
| 1. Polyester diol | 22.35 |
| 2. Amide diol | 1.33 |
| 3. Polycarbonate diol | 3.52 |
| 4. Polyethylene oxide[a] | 5.86 |
| 5. Trimethylol propane | 0.53 |
| 6. Isophorone Diisocyanate | 7.32 |
| 7. Methyl propyl ketone | 1.01 |
| 8. Neopentyl glycol | 0.46 |
| 9. Trimethylolpropane | 0.35 |
| 10. Butyl cellosolve | 10.63 |
| 11. Deionized water | 41.64 |

[a]Carbowax®, a polyethylene oxide having a molecular weight of 2000, available from Union Carbide.

(continued)

| Ingredient | Weight % |
|---|---|
| TOTAL | 100.00 |

The first seven ingredients, in the amounts specified, were charged to a 3 neck flask, placed under a nitrogen blanket and heated to 109°C. The reaction mixture was held at this temperature for three hours. After three hours the first titration was made.

When it was determined by titration that there was 0.24 meq isocyanate per gram of resin remaining, the remaining isocyanate was capped. For capping the neopentyl glycol and trimethylolpropane, in the amounts specified were added to the reaction mixture and heated to 109°C for two hours. After titration showed that there was no remaining isocyanate, the reaction was cooled to 92°C and charged with the butyl cellosolve. The reaction cooling was continued until a temperature of 56°C was reached. The resulting polyurethane resin was then charged with deionized water.

## EXAMPLE 7

**Nonionic Amide Modified Polyurethane**

The following ingredients were reacted as described herein below to provide a nonionic amide modified polyurethane polymer.

| Ingredient | Weight % |
|---|---|
| 1. Polyester Diol | 30.87 |
| 2. Polyethylene Oxide[a] | 5.86 |
| 3. Amide diol | 1.33 |
| 4. Trimethylolpropane | 0.53 |
| 5. Isophorone Diisocyanate | 6.88 |
| 6. methyl propyl ketone | 1.01 |
| 7. neopentyl glycol | 0.46 |
| 8. trimethylolpropane | 0.35 |
| 9. butyl cellosolve | 10.63 |
| 10. deionized water | 42.08 |
| TOTAL | 100.00 |

[a]Carbowax® a polyethylene oxide having a molecular weight of 2000 available from Union Carbide.

The first six ingredients, in the amounts specified, were charged to a 3 neck flask, placed under a nitrogen blanket and heated to 109°C. The reaction mixture was held at this temperature for three hours. After three hours the first titration was made.

When it was determined by titration that there was 0.24 meq isocyanate per gram of resin remaining, the remaining isocyanate was capped. For capping the neopentyl glycol and trimethylolpropane, in the amounts specified were added to the reaction mixture and heated to 109°C for two hours.

After titration showed that there was no remaining isocyanate, the reaction was cooled to 92°C and charged with the butyl cellosolve. The reaction cooling was continued until a temperature of 56°C was reached. The resulting polyurethane resin was then charged with deionized water.

## EXAMPLE 8

**Anionic Amide Modified Polyurethane Resin**

| Ingredient | Weight % |
|---|---|
| 1. Polyester Diol | 15.75 |
| 2. Amide Diol | 4.60 |

(continued)

| Ingredient | Weight % |
|---|---|
| 3. Dimethylolpropionic acid | 1.09 |
| 4. neopentyl glycol | 0.36 |
| 5. isophorone diisocyanate | 6.95 |
| 6. methyl ethyl ketone | 2.45 |
| 7. trimethylolpropane | 1.10 |
| 8. n-butanol | 1.92 |
| 9. dimethyl ethanolamine | 0.72 |
| 10. n-butanol | 0.30 |
| 11. deionized water | 64.80 |
| TOTAL | 100.00 |

The first six ingredients, in the amounts specified, were charged to a 3 neck flask, placed under a nitrogen blanket and heated to 109°C. The reaction mixture was held at this temperature for three hours. After three hours the first titration was made.

When it was determined by titration that there was 0.24 meq isocyanate per gram of resin remaining, the remaining isocyanate was capped. For capping, the trimethylolpropane, in the amounts specified was added to the reaction mixture and heated to 109°C for two hours. After titration showed that there was no remaining isocyanate, the reaction was cooled to 92°C and charged with n-butanol and dimethylethanolamime. The reaction cooling was continued until a temperature of 56°C was reached. The resulting polyurethane resin was then charged with deionized water.

**EXAMPLE 9**

**Anionic Amide Modified Polyester Polycarbonate Polyurethane Resin**

| Ingredient | Weight % |
|---|---|
| 1. Polyester Diol | 14.28 |
| 2. Amide Diol | 2.60 |
| 3. Polycarbonate Diol | 2.60 |
| 4. Dimethylolpropionic acid | 1.09 |
| 5. neopentyl glycol | 0.36 |
| 6. isophorone diisocyanate | 6.95 |
| 7. methyl ethyl ketone | 2.45 |
| 8. n-butanol | 1.19 |
| 9. dimethyl ethanolamine | 0.72 |
| 10. n-butanol | 1.76 |
| 11. deionized water | 64.79 |
| TOTAL | 100.00 |

The first seven ingredients, in the amounts specified, were charged to a 3 neck flask, placed under a nitrogen blanket and heated to 109°C. The reaction mixture was held at this temperature for three hours. After three hours the first titration was made.

When it was determined by titration that there was 0.24 meq isocyanate per gram of resin remaining, the remaining isocyanate was capped. For capping, the trimethylolpropane, in the amounts specified was added to the reaction mixture and heated to 109°C for two hours. After titration showed that there was no remaining isocyanate, the reaction was cooled to 92°C and charged with n-butanol and dimethylethanolamime. The reaction cooling was continued until a temperature of 56°C was reached. The resulting polyurethane resin was then charged with deionized water.

**Claims**

1. A water dispersible polyamide modified polyurethane resin comprising the reaction product of

   a) between 3 and 20 percent by weight of a polyamide monomer obtained by reacting

   i) a compound selected from the group consisting of aromatic, aliphatic, and cycloaliphatic anhydrides and diacid halides with
   ii) an amine containing compound selected from the group consisting of diamines, amino alcohols, amino thiois and mixtures thereof,

   b) between 30 and 70 percent by weight of a component having at least two reactive hydroxyl groups,
   c) between 15 and 30 percent by weight of a diisocyanate functional monomer, and
   d) between 5 and 30 percent by weight of a monomer having a hydrophilic functional group, but not being a component b),

   whereby the weight values are based on total resin weight.

2. The polyamide modified polyurethane resin composition of claim 1, wherein the polyamide monomer is obtained by reacting compound (i) selected from the group consisting of cyclic anhydrides and diacid chlorides with compound (ii), wherein the compounds (i) and (ii) are present in a molar ratio of 1:1 to 1:2 respectively, and the polyamide monomer has a molecular weight of between 200 and 2000.

3. The polyamide modified polyurethane resin of claim 1, wherein the amine containing compound used to form the polyamide monomer is selected from the group consisting of ethanolamine, propanolamine, 2-amino-2-methyl-1-propanol, 2-amino ethanethiol, 1,4-diaminocyclohexane and ethylene diamine.

4. The polyamide modified polyurethane resin composition of claim 1, wherein the component (b) is selected from the group consisting of polyois, and aromatic and aliphatic diols and triols.

5. The polyamide modified polyurethane resin composition of Claim 1, wherein the component (b) is selected from the group consisting of polyester polyol, polycarbonate polyol, trimethylolpropane, hexanetriol and pentaerythritol and mixtures thereof.

6. The polyamide modified polyurethane resin composition of claim 1, wherein the molar ratio of polyamide monomer (a) to component (b) is 10:90 respectively.

7. The polyamide modified polyurethane resin composition of Claim 1, wherein the isocyanate functional monomer is an aliphatic diisocyanate compound.

8. The polyamide modified polyurethane resin composition of Claim 1, wherein the isocyanate functional monomer is selected from the group consisting of isophorone diiso- cyanate,. hexamethylene diisocyanate, dicyclohexylmethane di isocyanate, diphenyl methane-4:4'diisocyanate, toluene diisocyanate, methylcyclohexylene diisocyanate, and cyclohexylmethane diisocyanate.

9. The composition of claim 1, wherein the hydrophilic functional group is a carboxyl group.

10. The polyamide modified polyurethane resin composition of Claim 1, wherein the hydrophilic functional groups are present in a compound selcted from the group consisting of polyvinyl methyl ether, polyethylene oxide, polypropylene oxide, polyoxymethylene, polyaziridine, and polyethylene imine.

11. The polyamide modified polyurethane resin composition of Claim 1, wherein the hydrophilic functional groups are selected from the group consisting of polyethylene oxide, polypropylene oxide and polyvinyl methyl ether.

12. The polyamide modified polyurethane resin composition of Claim 1, further comprising a compound selected from the group consisting of trifunctional monomers and amino alcohols for capping any remaining unreacted isocyanate functionality in the resin.

13. The polyamide modified polyurethane resin composition of Claim 10, wherein the compound for capping remaining isocyanate is selected from the group consisting of ethanol amine, diethanolamine, trimethylolpropane and ethylene glycol.

14. The polyamide modified polyurethane resin composition of Claim 8, further comprising an amine selected from the group consisting of primary, secondary and tertiary amines, for acid salting the resin.

15. The polyamide modified polyurethane resin composition of Claim 9, further comprising a cosolvent.

16. An aqueous coating composition comprising the polyamide modified polyurethane resin of claim 1, crosslinking agent and pigment.

17. A coated article, comprising a substrate with at least one layer of the coating defined in claim 16.


**Patentansprüche**

1. Wasserdispergierbares polyamidmodifiziertes Polyurethanharz, welches das Umsetzungsprodukt aus

 a) zwischen 3 und 20 Gewichtsprozent eines durch Umsetzung

 i) einer Verbindung aus der Gruppe bestehend aus aromatischen, aliphatischen und cycloaliphatischen Anhydriden und Disäurehalogeniden mit
 ii) einer aminogruppenhaltigen Verbindung aus der Gruppe bestehend aus Diaminen, Aminoalkoholen, Aminothiolen und deren Gemischen

 erhaltenen Polyamidmonomers,

 b) zwischen 30 und 70 Gewichtsprozent einer Komponente mit mindestens zwei reaktiven Hydroxylgruppen,

 c) zwischen 15 und 30 Gewichtsprozent eines diisocyanatfunktionellen Monomers und

 d) zwischen 5 und 30 Gewichtsprozent eines Monomers mit einer hydrophilen funktionellen Gruppe, bei der es sich aber nicht um eine Komponente b) handelt,

 wobei sich die Gewichtsangaben auf das Harzgesamtgewicht beziehen, darstellt.

2. Polyamidmodifizierte Polyurethanharzzusammensetzung nach Anspruch 1, bei der das Polyamidmonomer durch Umsetzung einer Verbindung (i) aus der Gruppe bestehend aus cyclischen Anhydriden und Disäurechloriden mit einer Verbindung (ii) in einem Molverhältnis von Verbindung (i) zu Verbindung (ii) von 1:1 bis 1:2 erhalten wird und ein Molekulargewicht zwischen 200 und 2000 aufweist.

3. Polyamidmodifiziertes Polyurethanharz nach Anspruch 1, bei dem die zur Bildung des Polyamidmonomers verwendete aminogruppenhaltige Verbindung aus der Gruppe bestehend aus Ethanolamin, Propanolamin, 2-Amino-2-methyl-1-propanol, 2-Aminoethanthiol, 1,4-Diaminocyclohexan und Ethylendiamin stammt.

4. Polyamidmodifizierte Polyurethanharzzusammensetzung nach Anspruch 1, bei der die Komponente (b) aus der Gruppe bestehend aus Polyolen und aromatischen und aliphatischen Diolen und Triolen stammt.

5. Polyamidmodifizierte Polyurethanharzzusammensetzung nach Anspruch 1, bei der die Komponente (b) aus der Gruppe bestehend aus Polyesterpolyol, Polycarbonatpolyol, Trimethylolpropan, Hexantriol, Pentaerythrit und deren Gemischen stammt.

6. Polyamidmodifizierte Polyurethanharzzusammensetzung nach Anspruch 1, bei der das Molverhältnis von Polyamidmonomer (a) zu Komponente (b) 10:90 beträgt.

7. Polyamidmodifizierte Polyurethanharzzusammensetzung nach Anspruch 1, bei der es sich bei dem isocyanatfunktionellen Monomer um eine aliphatische Diisocyanatverbindung handelt.

**8.** Polyamidmodifizierte Polyurethanharzzusammensetzung nach Anspruch 1, bei der das isocyanatfunktionelle Monomer aus der Gruppe bestehend aus Isophorondiisocyanat, Hexamethylendiisocyanat, Dicyclohexylmethandiisocyanat, Diphenylmethan4,4'-diisocyanat, Toluoldiisocyanat, Methylcyclohexylendiisocyanat und Cyclohexylmethandiisocyanat stammt.

**9.** Zusammensetzung nach Anspruch 1, bei der es sich bei der hydrophilen funktionellen Gruppe um eine Carboxylgruppe handelt.

**10.** Polyamidmodifizierte Polyurethanharzzusammensetzung nach Anspruch 1, bei der die hydrophilen funktionellen Gruppen in einer Verbindung aus der Gruppe bestehend aus Polyvinylmethylether, Polyethylenoxid, Polypropylenoxid, Polyoxymethylen, Polyaziridin und Polyethylenimin vorliegen.

**11.** Polyamidmodifizierte Polyurethanharzzusammensetzung nach Anspruch 1, bei der die hydrophilen funktionellen Gruppen aus der Gruppe bestehend aus Polyethylenoxid, Polypropylenoxid und Polyvinylmethylether stammen.

**12.** Polyamidmodifizierte Polyurethanharzzusammensetzung nach Anspruch 1, die außerdem auch noch eine Verbindung aus der Gruppe bestehend aus trifunktionellen Monomeren und Aminoalkoholen zur Verkappung jeglicher im Harz verbleibender nicht umgesetzter Isocyanatfunktionalität enthält.

**13.** Polyamidmodifizierte Polyurethanharzzusammensetzung nach Anspruch 10, bei der die Verbindung zur Verkappung von verbleibendem Isocyanat aus der Gruppe bestehend aus Ethanolamin, Diethanolamin, Trimethylolpropan und Ethylenglykol stammt.

**14.** Polyamidmodifizierte Polyurethanharzzusammensetzung nach Anspruch 9, die außerdem auch noch ein Amin aus der Gruppe bestehend aus primären, sekundären und tertiären Aminen zur Überführung des Harzes in die Säuresalzform enthält.

**15.** Polyamidmodifizierte Polyurethanharzzusammensetzung nach Anspruch 9, die außerdem auch noch ein Cosolvens enthält.

**16.** Wäßrige Lackzusammensetzung, enthaltend das polyamidmodifizierte Polyurethanharz nach Anspruch 1, Vernetzer und Pigment.

**17.** Lackierter Gegenstand mit einem Substrat mit mindestens einer Schicht aus dem Lack gemäß Anspruch 16.


**Revendications**

**1.** Une résine de polyuréthanne modifiée par un polyamide dispersible dans l'eau comprenant le produit de réaction de :

a) entre 3 et 20 pour cent en poids d'un monomère polyamide obtenu par la réaction

i) d'un composé choisi dans le groupe constitué par les anhydrides aromatiques, aliphatiques et cycloaliphatiques et les halogénures de diacide avec
ii) un composé aminé choisi dans le groupe constitué par les diamines, les aminoalcools, les aminothiols et des mélanges de ceux-ci,

b) entre 30 et 70 pour cent en poids d'un composant possédant au moins deux groupes hydroxyle réactifs,
c) entre 15 et 30 pour cent en poids d'un monomère à fonction diisocyanate, et
d) entre 5 et 30 pour cent en poids d'un monomère possédant un groupe fonctionnel hydrophile mais n'étant pas un composé b),
où les valeurs pondérales sont basées sur le poids total de la résine.

**2.** Composition de résine de polyuréthanne modifiée par un polyamide de la revendication 1, dans laquelle le monomère polyamide est obtenu par réaction d'un composé (i) choisi dans le groupe constitué par les anhydrides cycliques et les chlorures de diacide avec un composé (ii), où les composés (i) et (ii) sont présents en un rapport molaire de 1:1 à 1:2 respectivement, et le monomère polyamide a une masse moléculaire comprise entre 200 et 2 000.

**3.** Résine de polyuréthanne modifiée par un polyamide de la revendication 1, dans laquelle le composé aminé utilisé pour former le monomère polyamide est choisi dans le groupe constitué par l'éthanolamine, la propanolamine, le 2-amino-2-méthyl-1-propanol, le 2-aminoéthanethiol, le 1,4-diaminocyclohexane et l'éthylènediamine.

**4.** Composition de résine de polyuréthanne modifiée par un polyamide de la revendication 1, dans laquelle le composé (b) est choisi dans le groupe constitué par les polyols et les diols et triols aromatiques et aliphatiques.

**5.** Composition de résine de polyuréthanne modifiée par un polyamide de la revendication 1, dans laquelle le composé (b) est choisi dans le groupe constitué par le polyesterpolyol, le polycarbonatepolyol, le triméthylolpropane, l'hexanetriol et le pentaérythritol, et des mélanges de ceux-ci.

**6.** Composition de résine de polyuréthanne modifiée par un polyamide de la revendication 1, dans laquelle le rapport molaire du monomère polyamide (a) au composant (b) est de 10:90 respectivement.

**7.** Composition de résine de polyuréthanne modifiée par un polyamide de la revendication 1, dans laquelle le monomère à fonction isocyanate est un composé diisocyanate aliphatique.

**8.** Composition de résine de polyuréthanne modifiée par un polyamide de la revendication 1, dans laquelle le monomère à fonction isocyanate est choisi dans le groupe constitué par l'isophorone diisocyanate, l'hexaméthylène diisocyanate, le dicyclohexylméthane diisocyanate, le diphénylméthane-4:4'-diisocyanate, le toluène diisocyanate, le méthylcyclohexylène diisocyanate et le cyclohexylméthane diisocyanate.

**9.** Composition de la revendication 1, dans laquelle le groupe fonctionnel hydrophile est un groupe carboxyle.

**10.** Composition de résine de polyuréthanne modifiée par un polyamide de la revendication 1, dans laquelle les groupes fonctionnels hydrophiles sont présents dans un composé choisi dans le groupe constitué par le polyvinylméthyléther, l'oxyde de polyéthylène, l'oxyde de polypropylène, le polyoxyméthylène, la polyaziridine et la polyéthylèneimine.

**11.** Composition de résine de polyuréthanne modifiée par un polyamide de la revendication 1, dans laquelle les groupes fonctionnels hydrophiles sont choisis dans le groupe constitué par l'oxyde de polyéthylène, l'oxyde de polypropylène et le polyvinylméthyléther.

**12.** Composition de résine de polyuréthanne modifiée par un polyamide de la revendication 1, comprenant en outre un composé choisi dans le groupe constitué par les monomères trifonctionnels et les aminoalcools, pour coiffer toute fonction isocyanate n'ayant pas réagi restant dans la résine.

**13.** Composition de résine de polyuréthanne modifiée par un polyamide de la revendication 10, dans laquelle le composé destiné à coiffer tout isocyanate restant est choisi dans le groupe constitué par l'éthanolamine, la diéthanolamine, le triméthylolpropane et l'éthylèneglycol.

**14.** Composition de résine de polyuréthanne modifiée par un polyamide de la revendication 8, comprenant en outre une amine choisie dans le groupe constitué par les amines primaires, secondaires et tertiaires, pour créer un sel d'acide dans la résine.

**15.** Résine de polyuréthanne modifiée par un polyamide de la revendication 9, comprenant en outre un cosolvant.

**16.** Composition de revêtement aqueuse comprenant la résine de polyuréthanne modifiée par un polyamide de la revendication 1, un agent de réticulation et un pigment.

**17.** Article revêtu, comprenant un substrat avec au moins une couche du revêtement défini dans la revendication 16.